(19) **Europäisches Patentamt / European Patent Office / Office européen des brevets**

(11) **EP 3 417 506 B1**

(12) **FASCICULE DE BREVET EUROPEEN**

(45) Date de publication et mention de la délivrance du brevet:
**08.07.2020 Bulletin 2020/28**

(21) Numéro de dépôt: **17704287.6**

(22) Date de dépôt: **15.02.2017**

(51) Int Cl.:
*H01M 8/2475* (2016.01)       *H01M 8/124* (2016.01)
*H01M 8/2425* (2016.01)       *H01M 8/04746* (2016.01)
*H01M 8/0438* (2016.01)       *H01M 8/04082* (2016.01)
*H01M 8/04089* (2016.01)      *C25B 1/12* (2006.01)
*C25B 1/04* (2006.01)         *C25B 15/02* (2006.01)
*C25B 1/00* (2006.01)         *C25B 9/20* (2006.01)

(86) Numéro de dépôt international:
**PCT/EP2017/053438**

(87) Numéro de publication internationale:
**WO 2017/140745 (24.08.2017 Gazette 2017/34)**

(54) **SYSTÈME D'ÉLECTROLYSE DE L'EAU (SOEC) OU PILE À COMBUSTIBLE (SOFC) À FONCTIONNEMENT SOUS PRESSION DANS UNE ENCEINTE ÉTANCHE DONT LA RÉGULATION EST AMELIORÉE**

WASSERELEKTROLYSESYSTEM (SOEC) ODER BRENNSTOFFZELLE (SOFC) ZUM BETRIEB UNTER DRUCK IN EINER ENGEN UMGEBUNG MIT VERBESSERTER REGELUNG

WATER ELECTROLYSIS SYSTEM (SOEC) OR FUEL CELL (SOFC) OPERATING UNDER PRESSURE IN A TIGHT ENCLOSURE WITH IMPROVED REGULATION

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **16.02.2016 FR 1651235**

(43) Date de publication de la demande:
**26.12.2018 Bulletin 2018/52**

(73) Titulaire: **Commissariat à l'Énergie Atomique et aux Énergies Alternatives 75015 Paris (FR)**

(72) Inventeurs:
• **PETITJEAN, Marie 38000 Grenoble (FR)**
• **CHATROUX, André 38210 Tullins (FR)**

(74) Mandataire: **Nony 11 rue Saint-Georges 75009 Paris (FR)**

(56) Documents cités:
**WO-A1-2015/185039       JP-A- 2010 146 934**

EP 3 417 506 B1

**Description**

Domaine technique

La présente invention concerne le domaine des piles à combustibles à oxydes solides (SOFC, acronyme anglais pour « Solid Oxide Fuel Cell ») et celui de l'électrolyse de l'eau à haute température (EHT, ou EVHT pour électrolyse de la vapeur d'eau à haute température, ou HTE acronyme anglais pour High Temperature Electrolysis, ou encore HTSE acronyme anglais pour High Temperature Steam Electrolysis) également à oxydes solides (SOEC, acronyme anglais pour « Solid Oxide Electrolyte Cell ».

L'invention a trait plus particulièrement à la régulation de pression d'un système électrolyseur EHT ou d'une pile à combustible SOFC fonctionnant sous pression.

Bien que décrite en référence principalement à l'application d'électrolyse de l'eau à haute température, l'invention s'applique tout aussi bien à une pile à combustible SOFC.

Art antérieur

L'électrolyse de l'eau est une réaction électrolytique qui décompose l'eau en dioxygène et dihydrogène gazeux avec l'aide d'un courant électrique selon la réaction: $H_2O \rightarrow H_2 + 1/2 O_2$.

Pour réaliser l'électrolyse de l'eau, il est avantageux de la réaliser à haute température typiquement entre 600 et 950°C, car une partie de l'énergie nécessaire à la réaction peut être apportée par la chaleur qui est moins chère que l'électricité et l'activation de la réaction est plus efficace à haute température et ne nécessite pas de catalyseur.

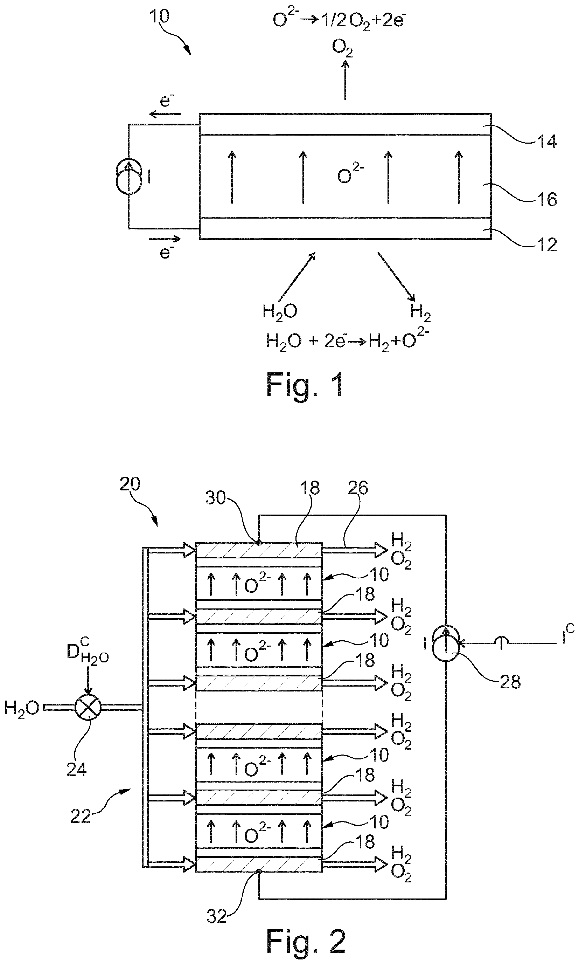

Comme schématisée en figure 1, une cellule d'électrolyse à oxydes solides 10, ou «SOEC» (acronyme anglo-saxon « Solid Oxide Electrolyte Cell ») comprend notamment :

- une première électrode conductrice poreuse 12, ou « cathode », destinée à être alimentée en vapeur d'eau pour la production de dihydrogène,
- une seconde électrode conductrice poreuse 14, ou « anode », par laquelle s'échappe le dioxygène ($O_2$) produit par l'électrolyse de l'eau injectée sur la cathode, et
- une membrane à oxyde solide (électrolyte dense) 16 prise en sandwich entre la cathode 12 et l'anode 14, la membrane 16 étant conductrice anionique pour de hautes températures, usuellement des températures supérieures à 600°C.

En chauffant la cellule 10 au moins à cette température et en injectant un courant électrique $I$ entre la cathode 12 et l'anode 14, il se produit alors une réduction de l'eau sur la cathode 12, ce qui génère du dihydrogène (H2) au niveau de la cathode 12 et du dioxygène au niveau de l'anode 14.

Pour mettre en œuvre l'électrolyse à haute température, il est connu d'utiliser un électrolyseur de type SOEC (acronyme anglais de « Solid Oxyde Electrolyte Cell »), constitué d'un empilement de motifs élémentaires comportant chacun une cellule d'électrolyse à oxydes solides, constituée de trois couches anode/électrolyte/cathode superposées l'une sur l'autre, et de plaques d'interconnexion en alliages métalliques aussi appelées plaques bipolaires, ou interconnecteurs. Les interconnecteurs ont pour fonction d'assurer à la fois le passage du courant électrique et la circulation des gaz au voisinage de chaque cellule (vapeur d'eau injectée, hydrogène et oxygène extrait dans un électrolyseur EHT ; air et hydrogène injectés et eau extraite dans une pile SOFC) et de séparer les compartiments anodiques et cathodiques qui sont les compartiments de circulation des gaz du côté respectivement des anodes et des cathodes des cellules. Pour réaliser l'électrolyse de la vapeur d'eau à haute température EHT, on injecte de la vapeur d'eau $H_2O$ dans le compartiment cathodique. Sous l'effet du courant appliqué à la cellule, la dissociation des molécules d'eau sous forme vapeur est réalisée à l'interface entre l'électrode à hydrogène (cathode) et l'électrolyte: cette dissociation produit du gaz dihydrogène H2 et des ions oxygène. Le dihydrogène est collecté et évacué en sortie de compartiment à hydrogène. Les ions oxygène $O^{2-}$ migrent à travers l'électrolyte et se recombinent en dioxygène à l'interface entre l'électrolyte et l'électrode à oxygène (anode).

Un empilement 20 de cellules d'électrolyse, destiné à produire une quantité importante d'hydrogène, est illustré par la vue schématique de la figure 2. Notamment, les cellules 10 sont empilées les unes sur les autres en étant séparées par des plaques d'interconnexion 18 connectées à une alimentation 22 en vapeur d'eau pour l'injection de cette vapeur sur les cathodes des cellules 10 conformément à un débit de vapeur d'eau $D_{H_2O}$ réglé par une vanne pilotable 24. Les plaques 18 sont également connectées à un collecteur de gaz 26 pour la collecte des gaz issus de l'électrolyse.

Un exemple d'empilement et de structure de plaques d'interconnexion est par exemple décrit dans la demande de brevet WO 2011/110676.

Un tel électrolyseur peut également fonctionner en co-électrolyse, c'est-à-dire avec un mélange de gaz en entrée cathodique composé de vapeur d'eau ($H_2O$) et de gaz carbonique ($CO_2$). Le mélange en sortie cathodique est alors composé d'hydrogène (H2), de vapeur d'eau ($H_2O$), de monoxyde de carbone (CO) et de gaz carbonique ($CO_2$).

Pour la mise en œuvre effective de l'électrolyse par l'empilement 20, l'empilement est porté à une température supérieure à 600°C, usuellement une température comprise entre 600°C et 950°C, l'alimentation en gaz est mise en marche à débit constant et une source d'alimentation électrique 28 est branchée entre deux bornes 30, 32 de l'empilement 20 afin d'y faire circuler le courant *I*.

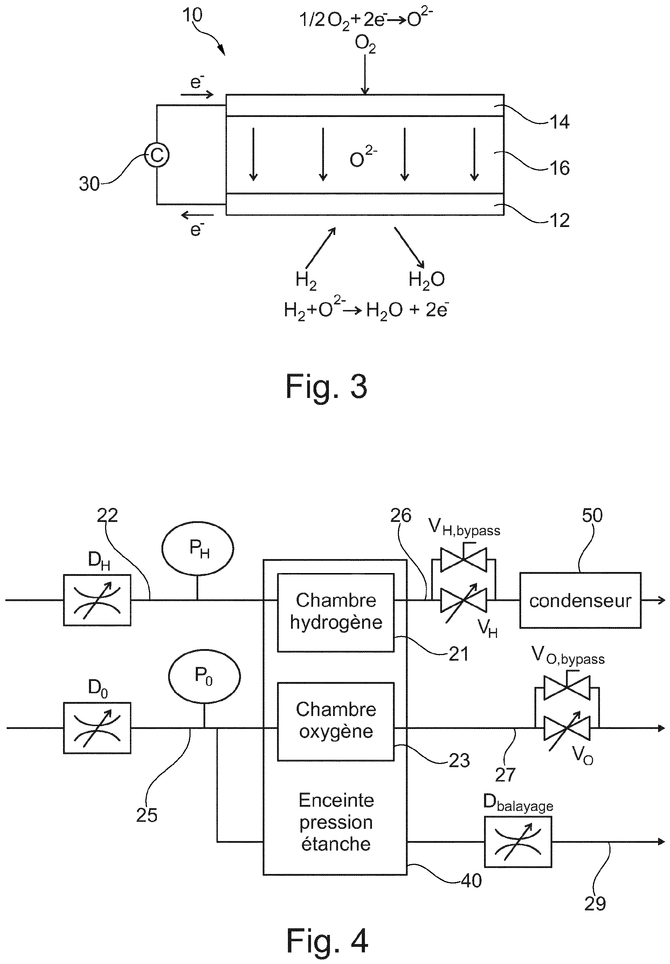

Une pile à oxyde solide à haute température, plus connue sous le nom de pile SOFC (pour « *Solid Oxyde Fuel Cell* ») et un électrolyseur EVHT peuvent avoir des structures identiques, seul leur mode de fonctionnement étant différent. En se référant à la figure 3, une cellule électrochimique constitutive d'une pile SOFC comprend les mêmes éléments, que sont l'anode 12, la cathode 14, l'électrolyte 16, qu'une cellule d'électrolyse.

Une cellule de la pile est alimentée, avec des débits constants, sur son anode par du dihydrogène ou un autre combustible comme du méthane $CH_4$, et sur sa cathode par du dioxygène pur ou contenu dans l'air envoyé, et connectée à une charge C pour délivrer le courant électrique produit.

Dans un réacteur à empilement tel que décrit ci-dessus, l'étanchéité entre les cellules à oxydes solides 10 et les plaques d'interconnexion 18 est réalisée par des joints qui constituent un des points faibles du système.

En effet, ces joints à base de verre ou de vitrocéramique assurant l'étanchéité de l'empilement vis-à-vis de l'atmosphère sont fragiles et ne supportent qu'une faible surpression de l'ordre de quelques dizaines ou centaines de millibars.

Jusqu'à présent, de tels systèmes ne fonctionnent qu'à pression atmosphérique même si quelques études scientifiques commencent à analyser le fonctionnement sous pression.

Le fonctionnement interne d'une pile à combustible SOFC ou d'un réacteur EHT sous pression, typiquement de quelques bars à quelques dizaines de bars, typiquement 30 bars, requiert alors une solution pour éviter la perte des étanchéités par les joints.

Il est déjà connu une solution qui consiste à placer le réacteur à empilement EHT ou une pile SOFC au sein d'une enceinte étanche elle-même pressurisée. On peut citer ici la publication [1], les demandes de brevets ou brevets FR 2957361A1, US2002/0081471 et US 6689499 B2 qui divulguent ce type de solution. Cette solution connue offre l'avantage de pouvoir imposer la même pression entre l'intérieur et l'extérieur de l'empilement. Autrement dit, il y a un équilibrage des pressions entre l'enceinte et les chambres (compartiments) de l'empilement. Cela permet donc un fonctionnement à une pression élevée, de quelques bars à quelques dizaines de bars, sans sollicitation mécanique des joints en verre ou en vitrocéramique.

Ainsi, tant que la pression de chaque chambre (compartiment) anodique ou cathodique de l'empilement est globalement équilibrée avec la pression interne de l'enceinte, les joints d'étanchéité ne sont soumis qu'à une pression différentielle faible, typiquement quasi-nulle.

En mode électrolyse, l'inconvénient majeur d'une telle solution est que cela se fait au prix d'une perte d'une partie de la production d'hydrogène, qui est brûlée dans l'enceinte. Ce n'est donc pas actuellement une solution envisageable à l'échelle industrielle, en mode électrolyse.

Certaines piles à combustibles haute température sont conçues de telle sorte qu'elles ne sont pas étanches côté cathode, ce qui peut simplifier le fonctionnement sous pression puisque dans ce cas la cathode est à la pression de l'enceinte.

En particulier, le brevet US6689499 B2 précité met en œuvre cette technique en mode pile à combustible, la recombinaison des gaz de sortie servant à chauffer l'empilement.

En mode électrolyse, la difficulté consiste aussi à obtenir en permanence et simultanément la même pression (à quelques millibars près) dans l'enceinte, dans chaque chambre anodique et dans chaque chambre cathodique, afin de récupérer au mieux les gaz produits.

Autrement dit, il est nécessaire de réaliser une régulation de pression suffisamment précise sur les lignes d'alimentation et de récupération des gaz dans l'empilement pour tenir la contrainte des pressions différentielles faibles sur les joints.

Mais, une des difficultés est due au fait que le gaz circulant dans les chambres cathodiques contient beaucoup de vapeur d'eau, laquelle peut se condenser lors de sa détente à pression atmosphérique.

Jusqu'à présent, les spécialistes en thermique préconisent une régulation de pression sur gaz sec. C'est donc ce qui est généralement mis en œuvre.

On peut citer ici les études résumées dans les publications [2] à [6]. Dans la plupart de ces études, les essais portent sur des piles à combustibles SOFC pour lesquels le gaz est sec ou très peu humide, ou alors sur des systèmes électrolyseurs SOEC dans lesquels les gaz sont asséchés dans un condenseur installé à l'intérieur de l'enceinte sous pression. De plus, dans la plupart des cas, seul un point de fonctionnement à 3 bars ou à 5 bars est possible.

Dans le domaine voisin des piles à combustibles à membrane d'échange de protons (PEM), les contraintes sur les joints et les pressions entre les chambres sont totalement différents puisque la membrane peut supporter une pression différentielle de plusieurs bars. Cependant, on peut noter la demande de brevet WO2012/008954A1 qui s'intéresse à une régulation de pression sur gaz humide grâce à une pompe fonctionnant à contre-flux et le brevet US7985507B2 qui divulgue sur une régulation au moyen d'une vanne tout-ou-rien. Les solutions divulguées dans cette demande et ce brevet ne sont cependant pas applicables dans les systèmes à oxydes solides aux contraintes bien plus importantes.

Une autre difficulté de la solution consistant à un électrolyseur EHT ou une pile à combustible SOFC à l'intérieur d'une enceinte pressurisée est liée au fait que l'empilement comprend des chambres (anodique et cathodique) de circulation des gaz qui présentent intrinsèquement un faible volume par rapport à celui de l'enceinte. La régulation de pression est dans ce cas difficile, car les variations de pression à l'intérieur de l'enceinte peuvent être très lentes par rapport celles à l'intérieur des chambres de l'empilement.

De cette manière, en cas d'augmentation rapide de pression dans l'une ou l'autre des chambres de l'empilement, il sera très difficile de faire monter la pression de l'enceinte aussi vite. Pour supprimer cette contrainte, l'étude [7] propose de mettre en œuvre un volume tampon en sortie de chaque ligne de circulation de gaz de l'empilement de façon à avoir trois volumes de gaz identiques, c'est-à-dire un volume comprenant les chambres anodiques et un premier volume tampon, un volume comprenant les chambres cathodiques et un deuxième volume tampon, et le volume délimité par l'enceinte. Ainsi, en disposant de trois volumes identiques, il est possible d'utiliser les mêmes vannes tout-ou-rien pour réguler la pression de l'enceinte et celle régnant à l'intérieur des chambres de l'empilement. Cette solution est contraignante car cela correspond à multiplier le volume de l'enceinte pression par un facteur 3 et donc le coût du système est bien plus important. Ces volumes tampon sont également pénalisants en mode de fonctionnement réversible car ils pénalisent le temps de basculement d'un mode à l'autre puisqu'il est nécessaire de les purger en gaz neutre à chaque fois.

En d'autres termes, il n'existe pas dans l'état de l'art relatif aux électrolyseurs et piles à combustibles haute température, de solution satisfaisante de système de régulation de pression sur gaz humide qui couvre une plage de fonctionnement depuis la pression atmosphérique jusqu'à quelques dizaines de bars.

La demande de brevet déposée sous le N°FR1559504 le 06 Octobre 2015 au nom de la demanderesse présente une solution satisfaisante de système de régulation de pression sur gaz humide qui couvre une plage de fonctionnement depuis la pression atmosphérique jusqu'à quelques dizaines de bars. Cependant, c'est une solution qui a été établie et démontrée sur la base d'un montage expérimental spécifique de faible dimension dont un des risques était la fuite du joint métallique de l'enceinte sous pression. Ainsi, bien que satisfaisante et opérationnelle dans bon nombre de configurations, cette solution nécessite de nombreuses mesures et régulations pour fonctionner dans ce cas pénalisant où l'enceinte sous-pression peut présenter un risque relativement important ou jugé comme tel de fuite vers l'extérieur. Le document WO 2015/185039 A1 divulgue un système d'électrolyse de l'eau dans une enceinte dont la pression interne est contrôlée.

Le document JP 2010146934 divulgue une pile à combustible de type SOFC dans une enceinte dont la pression interne est contrôlée.

Cela étant, de nombreuses configurations industrielles dans lesquelles l'étanchéité ou tout du moins un faible risque de fuite peut être garantie, sont et seront à envisager.

Il existe donc un besoin d'améliorer les systèmes de régulation des électrolyseurs ou piles à combustibles fonctionnant sous pression dans une enceinte dont l'étanchéité ou tout du moins un faible risque de fuite peut être garantie, notamment afin de s'affranchir d'au moins une partie des nombreuses mesures et régulations nécessaires pour la mise en œuvre de la solution selon la demande FR1559504 précitée.

Le but de l'invention est de répondre au moins en partie à ce besoin.

Exposé de l'invention

Pour ce faire, l'invention concerne un système comportant :

- au moins une première chambre dans laquelle un premier gaz, qui est un gaz potentiellement humide, est apte à circuler;
- au moins une première ligne d'alimentation apte à alimenter en gaz potentiellement humide, l'entrée de la première chambre jusqu'à une pression maximale de fonctionnement $P_{max}$, la première ligne d'alimentation comprenant un premier régulateur de débit apte à réguler le débit du premier gaz $D_H$ entre une valeur nulle et une valeur maximale $D_{H,max}$ :
- au moins une deuxième chambre dans laquelle un deuxième gaz, de préférence de l'air, est apte à circuler ;
- une enceinte étanche dans laquelle les première et deuxième chambres sont logées, et dans laquelle le même deuxième gaz est apte à circuler, l'enceinte étant apte à fonctionner sous pression du deuxième gaz jusqu'à la pression maximale de fonctionnement $P_{max}$;
- au moins une deuxième ligne d'alimentation apte à alimenter en deuxième gaz l'entrée de la deuxième chambre et l'enceinte étanche, la deuxième ligne d'alimentation comprenant un deuxième régulateur de débit apte à réguler le débit du deuxième gaz $Do$ entre une valeur nulle et une valeur maximale $D_{O,max}$;
- au moins une ligne de sortie, apte à évacuer le deuxième gaz de l'intérieur de l'enceinte étanche, ladite ligne de sortie comprenant un troisième régulateur de débit apte à réguler le débit du deuxième gaz $D_{balayage}$ entre une valeur nulle et une valeur maximale $D_{balayage,max}$ ;
- des capteurs de pression ($P_H$, $P_O$), aptes à mesurer la pression dans chacune des première et deuxième chambres, entre la pression atmosphérique et la valeur de pression maximale $P_{max}$ ;
- au moins deux vannes de régulation ($V_H$, $V_O$), agencées à l'extérieur de l'enceinte et respectivement sur la ligne de sortie de la ou des premières chambres, de la ou des deuxièmes chambres, chaque vanne étant apte à fonctionner à une température supérieure à la température de condensation du gaz humide à la pression maximale $P_{max}$ considérée, cha-

que vanne étant apte à être ouverte de 0% à 100% et présentant une capacité $K_v$ adaptée à la pression maximale $P_{max}$ et au débit moyen du gaz considéré sur chacune des deux lignes de sortie;

- des moyens de chauffage des lignes contenant le gaz humide à une température supérieure à la température de condensation de ce gaz humide à la pression maximale $P_{max}$ considérée ;
- des moyens de commande et d'asservissement pour commander et asservir les vannes de régulation ($V_H$, $V_O$) en fonction des différences de valeurs de pression mesurées par les capteurs de pression de sorte à obtenir une différence minimale de pression entre la ou les première chambre, la ou les deuxième chambres.

Par « gaz potentiellement humide », on entend ici et dans le cadre de l'invention un gaz dont l'état peut être déjà humide en entrée du système selon l'invention ou passer à un état humide lors de sa génération ou son passage au sein du système.

Par « enceinte étanche », on entend ici et dans le cadre de l'invention une enceinte qui présente un faible, voire très faible taux de fuite de gaz sous pression de l'intérieur de l'enceinte. Typiquement, l'enceinte peut présenter un taux de fuite inférieur à 1/1000<sup>ème</sup> de $D_O$.

Selon une variante, le système selon l'invention comprend un condenseur du gaz humide, agencé en aval de la vanne de régulation $V_H$, sur la ligne de sortie de la ou des premières chambres. Ainsi, le système ne comprend pas obligatoirement de condenseur. En effet, dans certaines applications, le gaz humide en sortie de système peut être utilisé tel quel sans qu'il soit nécessaire de le condenser. Cela peut être le cas si le gaz humide doit alimenter un certain type de réacteur ou réservoir, comme par exemple un méthaneur...

Selon un mode de réalisation avantageux, les moyens de commande et d'asservissement sont aptes en outre à commander et asservir les régulateurs de débit du deuxième gaz Do en fonction de l'état d'ouverture des vannes de régulation du deuxième gaz Vo, afin d'éviter les états d'ouverture ou de fermeture complète des vannes du deuxième gaz Vo.

Selon une application avantageuse, le système comprend un réacteur d'électrolyse ou de co-électrolyse à haute température (EHT) comprenant un empilement de cellules d'(de co-)électrolyse élémentaires à oxydes solides comprenant chacune une anode, une cathode, et un électrolyte intercalé entre l'anode et la cathode, les cellules étant connectées électriquement en série, l'empilement comprenant deux bornes électriques pour l'alimentation en courant des cellules et définissant des chambres de circulation de vapeur d'eau et d'hydrogène ou de vapeur d'eau, d'hydrogène et dioxyde de carbone ($CO_2$) sur les cathodes en tant que premières chambres et, des chambres de circulation en air ou en azote ou en oxygène ou un mélange de gaz contenant de l'oxygène sur les anodes en tant que deuxièmes chambres.

Selon une autre application avantageuse, le système comprend une pile à combustible (SOFC) à haute température comprenant un empilement de cellules électrochimiques élémentaires à oxydes solides comprenant chacune une anode, une cathode, et un électrolyte intercalé entre l'anode et la cathode, les cellules étant connectées électriquement en série, l'empilement comprenant deux bornes électriques pour la récupération en courant des cellules et définissant des chambres de circulation en dihydrogène ou un autre gaz combustible ou un mélange contenant un gaz combustible sur les anodes en tant que premières chambres et des chambres de circulation en air ou en azote ou en oxygène ou un mélange de gaz contenant de l'oxygène sur les cathodes en tant que deuxièmes chambres. Dans ce cas, le gaz en entrée de la première chambre n'est pas forcément humide, par contre il est humide en sortie car la vapeur d'eau est un produit de la réaction électrochimique dans cette première chambre.

Le système peut être réversible, la pile à combustible pouvant être un électrolyseur haute température et vice-versa.

L'invention s'applique aux piles ou électrolyseur "moyenne température", i.e. 400°C, ou encore PCFC, en anglais pour « *Proton Ceramic Fuel Cell* ».

De manière générale, en dehors du domaine technique des systèmes électrochimiques à oxydes solides l'invention s'applique à tous les systèmes pour lesquels il y a un besoin de régulation de pression de plusieurs chambres étanches logées dans une enceinte principale et dans chacune desquelles doit circuler un gaz sous pression.

Selon une variante de l'invention, le système peut comprendre au moins deux capteurs de pression absolue ($P_H$, $P_O$), aptes à mesurer chacun la pression respectivement dans chacune des première chambres, dans chacune des deuxième chambres.

De manière alternative, le système peut comprendre au moins un capteur de pression absolue $P_H$, apte à mesurer chacun la pression dans chacune des première chambres, et comprenant au moins un capteur de pression différentiel apte à mesurer respectivement la différence de pression entre la ou les deuxième chambres et la ou les première chambres $\Delta P_O=(P_O-P_H)$.

Selon une autre variante de l'invention, le système peut comprendre en outre des vannes de by-pass $V_{H,bypass}$, $V_{O,bypass}$ agencées chacune en parallèle respectivement des vannes de régulation $V_H$, $V_O$. Ces vannes by-pass permettent un fonctionnement à la pression atmosphérique lorsqu'elles sont ouvertes. A cet effet, ces vannes de by-pass ont un diamètre de passage du même ordre de grandeur que celui des lignes de circulation des gaz de façon à réduire la perte de charge au passage.

Ainsi, l'invention consiste essentiellement à :

- réguler en amont de l'une des chambres, le débit de gaz humide $D_H$ de façon à garantir la stabilité électrochimique du point de fonctionnement prédéterminé;

- réguler en amont de la ou des deuxièmes chambres, le débit de gaz Do de façon à garantir un balayage de gaz dans la ou les deuxièmes chambres et dans l'enceinte;
- réguler en aval de l'enceinte, le débit de deuxième gaz $D_{balayage}$ circulant dans l'enceinte pour assurer la détection et la sécurité vis-à-vis des fuites et éviter la formation d'une atmosphère explosive;
- contrôler la pression grâce aux vannes de régulation $V_H$, $V_O$ agencées en aval de l'empilement sur les gaz dont celui humide, qui sont en outre générale ment chauds.

Lors du fonctionnement du système, il va se produire au niveau des vannes de régulation, une détente des gaz qui a pour conséquence un refroidissement de ceux-ci.

Aussi, la solution selon l'invention va à l'encontre des préconisations habituelles des spécialistes de la thermique qui écartent un tel refroidissement car ils considèrent que cela peut conduire à la formation de gouttelettes d'eau liquide qui pourraient obturer l'orifice de la vanne.

Pour éviter cela, les spécialistes de la thermique proposent plutôt un assèchement des gaz avant leur arrivée sur les vannes de régulation.

Or, les inventeurs considèrent de par leur expérience que la solution selon l'invention qui consiste à effectuer une régulation sur gaz humide, fonctionne très bien à condition de maintenir les lignes contenant de la vapeur d'eau à une température supérieure à la température de condensation de la vapeur d'eau à la pression maximale $P_{max}$ considérée.

Et une régulation sur gaz humide présente même l'avantage pour les systèmes à oxydes solides, comme un réacteur EHT ou une pile SOFC de participer, grâce à cette détente, au refroidissement du gaz avant qu'il ne soit envoyé dans le condenseur dans lequel il sera refroidi pour éliminer la majorité de la vapeur d'eau.

De façon à avoir des changements de pression du même ordre de grandeur dans chacun des trois compartiments, à savoir la ou les premières chambres, la ou les deuxièmes chambres, et l'enceinte, il convient de préférence d'avoir le même ratio entre le volume du compartiment considéré et le débit de gaz maximum qui peut y être injecté.

En incluant le volume des lignes de circulation de gaz en amont et en aval de l'enceinte et des chambres, soit $Vol_H$ le volume de la ou des premières chambres, Volo le volume de la ou des deuxièmes chambres et de l'enceinte, les débitmètres de gaz sont de préférence dimensionnés pour respecter le ratio :

$$\frac{Vol_H}{D_{H,max}} = \frac{Vol_O}{D_{O,max}}$$

L'invention concerne également un procédé de fonctionnement du système qui vient d'être décrit, comprenant les étapes suivantes :

a/ définir les consignes de fonctionnement suivantes :

a1/ définir un débit $D_H$ qui correspond à la quantité de gaz potentiellement humide nécessaire pour un point de fonctionnement électrochimique prédéterminé;

a2/ définir un débit Do qui correspond à la quantité de deuxième gaz nécessaire pour un point de fonctionnement électrochimique prédéterminé et le balayage de l'enceinte étanche;

a3/ définir un débit $D_{balayage}$ qui correspond à la quantité de deuxième gaz nécessaire pour assurer la détection et la sécurité vis-à-vis des fuites et éviter la formation d'une atmosphère explosive dans l'enceinte;

a4/ définir une pression $P_{consigne}$ pour le point de fonctionnement prédéterminé ;

a5/ définir la pression différentielle $\Delta P_{O,consigne}$ correspondant à l'écart de pressions entre celle régnant dans la ou les deuxièmes chambres ainsi que dans l'enceinte étanche, et celle dans la ou les premières chambres;

b/ appliquer les régulations suivantes :

b1/ actionner le (ou les) régulateur(s) de débit de gaz humide afin de réguler le débit $D_H$ du gaz humide ;

b2/ actionner le (ou les) régulateur(s) de débit de deuxième gaz afin de réguler le débit Do entrant dans la ou les secondes chambres et dans l'enceinte;

b3/ actionner le (ou les) régulateur(s) de débit du gaz de balayage afin de réguler le débit $D_{balayage}$ sortant de l'enceinte;

b4/ actionner la vanne de régulation $V_H$ du gaz humide pour réguler la pression $P_H$ réelle de la ou des premières chambres sur la valeur de consigne $P_{consigne}$ ;

b5/ actionner la vanne Vo du deuxième gaz de sorte que la pression différentielle réelle entre la ou les deuxièmes et dans l'enceinte d'une part, et la ou les premières chambres $\Delta P_O=(P_O-P_H)$ d'autre part, soit régulée en fonction de l'erreur mesurée par rapport à la consigne $(\Delta P_{O,ccnsigne} -\Delta P_O)$, afin que la pression $P_O$ du deuxième gaz suive celle $P_H$ de la ou des premières chambres avec la pression différentielle de consigne $\Delta P_{O,consigne}$.

Selon une variante du procédé, il est prévu en outre une étape d'augmentation de débit du deuxième gaz Do si la vanne de régulation du deuxième gaz Vo,

est proche d'un état de fermeture complète.

A contrario, on peut prévoir une étape de diminution de débit du deuxième gaz Do si la vanne de régulation du deuxième gaz Vo est proche d'un état d'ouverture complète.

Autrement dit, en complément des régulations des étapes b1/ à b5/, on peut prévoir une augmentation ou diminution des débits Do, de préférence par asservissement, lorsque les vannes de régulation du deuxième gaz Vo risquent d'atteindre leurs limites de fermeture ou d'ouverture. Ainsi:

- si Vo risque de se fermer, alors le débit Do est augmenté ;
- si Vo risque de s'ouvrir à 100%, alors le débit Do est diminué.

En phase de montée en pression, la vanne de régulation $V_H$ du gaz potentiellement humide peut se fermer complètement. Dans ce cas, lorsque le système est un système électrochimique à oxydes solides, alors on veille à prendre des mesures de sécurité pour interrompre la production de gaz ou pour maintenir à une valeur minimale le débit du gaz.

En particulier, lorsque le système comprend un réacteur d'(de co-) électrolyse, la fermeture complète de la vanne de régulation $V_H$ du gaz humide (vapeur d'eau et hydrogène produit), il n'y a pratiquement plus de circulation des gaz réactifs sur les cellules d'électrolyse, il convient donc de mettre une sécurité pour stopper la production d'hydrogène en donnant une consigne d'intensité électrique à zéro.

De même, en mode pile à combustible SOFC il est peut être nécessaire de maintenir un débit d'oxygène pour alimenter les cellules en comburant. Cela permet de définir une valeur minimale de débit d'oxygène Do en dessous de laquelle le régulateur de débit ne pourra pas descendre. Une autre possibilité consiste à mettre une sécurité pour stopper la production d'électricité en donnant une consigne d'intensité électrique à zéro.

Description détaillée

D'autres avantages et caractéristiques de l'invention ressortiront mieux à la lecture de la description détaillée d'exemples de mise en œuvre de l'invention faite à titre illustratif et non limitatif en référence aux figures suivantes parmi lesquelles :

- la figure 1 est une vue schématique d'une cellule électrochimique élémentaire d'un électrolyseur EVHT ;
- la figure 2 est une vue schématique d'un empilement de cellules selon la figure 1 ;
- la figure 3 est une vue schématique d'une cellule électrochimique d'une pile à combustible SOFC ;
- la figure 4 est une vue schématique d'un système selon l'invention comprenant un électrolyseur EHT, la figure montrant les capteurs et régulateurs de débit nécessaires à la régulation de pression dans les chambres de circulation de la vapeur d'eau et d'hydrogène, de l'oxygène et dans l'enceinte étanche sous pression qui loge les chambres ;
- la figure 5 est une vue schématique des capteurs et régulateurs de débit avec la représentation des boucles d'asservissement du système selon la figure 4;
- la figure 6 est un organigramme informatique des régulations de pression selon le mode de réalisation de la figure 4;
- la figure 7 est un organigramme informatique de la régulation conforme à l'invention du débit Do des chambres de circulation de l'oxygène en fonction du pourcentage d'ouverture de la vanne Vo dans un module d'électrolyse haute température à enceinte étanche.

Les figures 1 à 3 relatives à l'état de l'art ont déjà été commentées en préambule. Elles ne sont donc pas détaillées ci-après.

Par souci de clarté, les mêmes éléments d'un réacteur d'électrolyse EHT selon l'état de l'art et d'un réacteur d'électrolyse EHT utilisé en tant que partie d'un système selon l'invention sont désignés par les mêmes références numériques.

On précise ici dans l'ensemble de la présente demande, les termes « inférieur », « supérieur », « dessus », « dessous », « intérieur », « extérieur », « « interne » « externe» sont à comprendre par référence à un interconnecteur selon l'invention en vue de coupe transversale selon l'axe de symétrie.

On précise également que les termes « amont », « aval », « entrée », « sortie » sont à considérer par rapport au sens de circulation des gaz.

On précise également que les modules d'électrolyseurs ou de piles à combustible décrits sont de type à oxydes solides (SOEC, acronyme anglais de « *Solid Oxyde Electrolyte Cell* »ou SOFC, acronyme anglais de « *Solid Oxyde Fuel Cell* ») fonctionnant à haute température.

Ainsi, tous les constituants (anode/électrolyte/cathode) d'une cellule d'électrolyse ou de pile sont des céramiques. La haute température de fonctionnement d'un électrolyseur (réacteur d'électrolyse) ou d'une pile est typiquement comprise entre 600°C et 950°C.

Typiquement, les caractéristiques d'une cellule d'électrolyse élémentaire SOEC convenant à l'invention, du type cathode support (CSC), peuvent être celles indiquées comme suit dans le tableau ci-dessous.

**TABLEAU**

| Cellule d'électrolyse | Unité | Valeur |
|---|---|---|
| **Cathode 2** | | |
| Matériau constitutif | | Ni-YSZ |
| Epaisseur | $\mu$m | 315 |

(suite)

| Cellule d'électrolyse | Unité | Valeur |
|---|---|---|
| **Cathode 2** | | |
| Conductivité thermique | $W\ m^{-1}\ K^{-1}$ | 13,1 |
| Conductivité électrique | $\Omega^{-1}\ m^{-1}$ | $10^5$ |
| Porosité | | 0,37 |
| Perméabilité | $m^2$ | $10^{-13}$ |
| Tortuosité | | 4 |
| Densité de courant | $A.m^{-2}$ | 5300 |
| **Anode 4** | | |
| Matériau constitutif | | LSM |
| Epaisseur | $\mu m$ | 20 |
| Conductivité thermique | $W\ m^{-1}\ K^{-1}$ | 9,6 |
| Conductivité électrique | $\Omega^{-1}\ m^{-1}$ | $1\ 10^4$ |
| Porosité | | 0,37 |
| Perméabilité | $m^2$ | $10^{-13}$ |
| Tortuosité | | 4 |
| Densité de courant | $A.m^{-2}$ | 2000 |
| **Electrolyte 3** | | |
| Matériau constitutif | | YSZ |
| Epaisseur | $\mu m$ | |
| Résistivité | $\Omega\ m$ | 0,42 |

En se référant à la figure 4, le système selon l'invention est régulé en pression de la pression atmosphérique à une pression choisie de l'ordre de 30 bars.

Le système comprend tout d'abord un réacteur d'électrolyse ou de co-électrolyse à haute température (EHT) comprenant un empilement 20 de cellules d' (de co-) électrolyse élémentaires à oxydes solides comprenant chacune une anode, une cathode, et un électrolyte intercalé entre l'anode et la cathode, les cellules étant connectées électriquement en série, l'empilement comprenant deux bornes électriques pour l'alimentation en courant des cellules et définissant des chambres de circulation 21 de vapeur d'eau et d'hydrogène ou de vapeur d'eau, d'hydrogène et dioxyde de carbone ($CO_2$) sur les cathodes et, des chambres de circulation 23 en air ou en azote ou en oxygène ou un mélange de gaz contenant de l'oxygène sur les anodes.

Le système comprend en outre :

- une ligne d'alimentation 22 apte à alimenter en vapeur d'eau l'entrée des chambres 21 jusqu'à une pression maximale de fonctionnement $P_{max}$ sur laquelle est agencé un régulateur de débit apte à réguler le débit de la vapeur d'eau et de l'hydrogène produit $D_H$ entre une valeur nulle et une valeur maximale $D_{H,max}$;

- une enceinte 40 dans laquelle l'empilement 20 avec ses chambres 21, 23 est logé, dans laquelle de l'air en tant que gaz de balayage est apte à circuler, l'enceinte étant apte à fonctionner sous pression jusqu'à la pression maximale de fonctionnement $P_{max}$;

- une ligne d'alimentation 25 apte à alimenter en air l'entrée des chambres 23 et l'enceinte étanche 40 sous pression, sur laquelle est agencé un régulateur de débit apte à réguler le débit d'air $D_O$ entre une valeur nulle et une valeur maximale $D_{O,max}$;

- une ligne de sortie 29 apte à faire circuler un débit de balayage en air à l'intérieur de l'enceinte, et sur laquelle est agencé un régulateur de débit apte à réguler le débit d'air $D_{balayage}$ entre une valeur nulle et une valeur maximale $D_{balayage\_max}$;

- des capteurs de pression $P_H$, $P_O$, aptes à mesurer la pression dans les chambres 21, 23, entre la pression atmosphérique et la valeur de pression maximale $P_{max}$ ;

- au moins deux vannes de régulation $V_H$, $V_O$, agencées à l'extérieur de l'enceinte 40 et respectivement sur la ligne de sortie des chambres 21, des chambres 23, chaque vanne étant apte à fonctionner à une température supérieure à la température de condensation du gaz humide à la pression maximale $P_{max}$ considérée, chaque vanne étant apte à être ouverte de 0% à 100% et présentant une capacité $K_v$ adaptée à la pression maximale $P_{max}$ et au débit moyen du gaz considéré sur chacune des deux lignes de sortie;

- au moins deux vannes de by-pass $V_{H,bypass}$, $V_{O,bypass}$ agencées chacune en parallèle respectivement des vannes de régulation $V_H$, $V_O$ ;

- des moyens de chauffage des lignes de la vapeur d'eau et de l'hydrogène produit à une température supérieure à la température de condensation de ce gaz humide à la pression maximale $P_{max}$ considérée ;

- un condenseur 50, agencé en aval de la vanne de régulation $V_H$, sur la ligne de sortie des chambres 21;

- des moyens de commande et d'asservissement pour commander et asservir les vannes de régulation ($V_H$, $V_O$) en fonction des différences de valeurs de pression mesurées par les capteurs de pression de sorte à obtenir une différence minimale de pression entre les chambres 21, 23.

Les moyens de commande et d'asservissement comprennent notamment un microprocesseur et des régulateurs PID (acronyme pour « Proportionnel Intégral Dérivé »).

Les moyens de chauffage des différentes lignes de gaz humide sont notamment des cordons chauffants régulés en température.

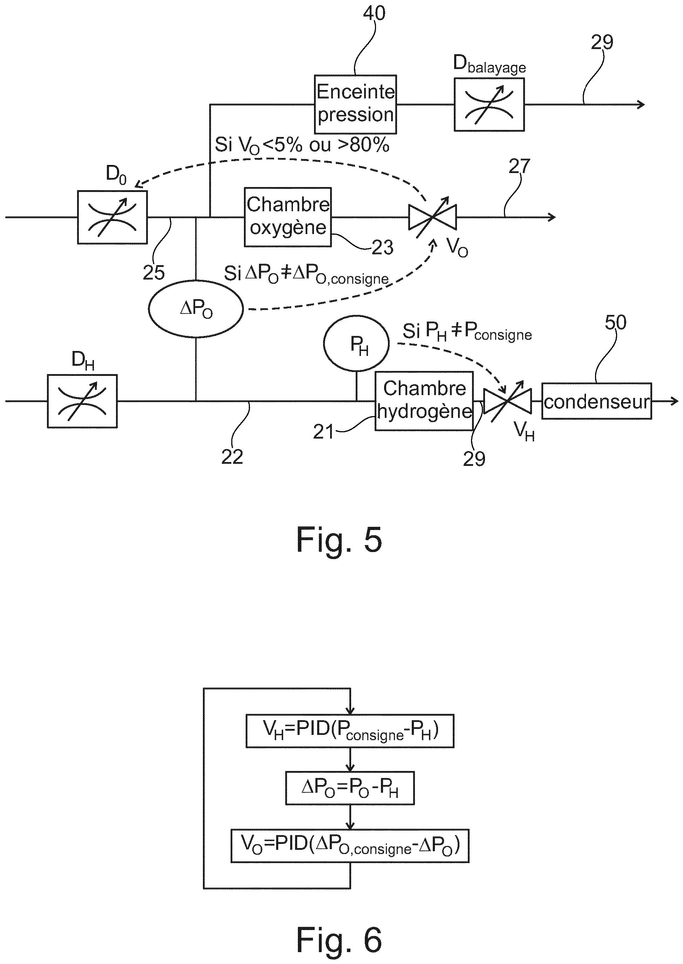

On se réfère maintenant à la figure 5 qui explicite un exemple de boucles de régulation mises en œuvre automatiquement par un système selon l'invention.

Au préalable, un opérateur chargé du fonctionnement du système définit des consignes de fonctionnement.

Les boucles de régulation selon l'invention consistent successivement à :

- réguler en amont de l'empilement 20 le débit de gaz constitué d'un mélange de vapeur d'eau et d'hydrogène $D_H$ défini par l'opérateur de façon à garantir la stabilité du point de fonctionnement des cellules à oxydes solides;
- réguler en amont de l'empilement 20 le débit d'air Do défini par l'opérateur de façon à garantir la stabilité du point de fonctionnement des cellules à oxydes solides;
- réguler en aval de l'enceinte 40 le débit d'air $D_{balayage}$ défini par l'opérateur de façon à garantir la sécurité du système;
- réguler sur une consigne opérateur $P_{consigne}$, la pression des chambres d'hydrogène 21 grâce à la vanne de régulation $V_H$ en aval de l'empilement 20 ;
- réguler sur une consigne opérateur $\Delta P_{O,consigne}$, l'écart de pression entre chambres d'oxygène 23 et d'hydrogène 21, $\Delta P_O=(P_O-P_H)$ grâce à la vanne de régulation Vo placée en aval de l'empilement 20 ;
- ajuster périodiquement selon un pas de 10% le débit d'oxygène $D_O$ si la vanne Vo se ferme à moins de 5% ou s'ouvre à plus de 80%.

A titre d'exemple, les consignes définies par l'opérateur peuvent être les suivantes :

- débit de vapeur d'eau/hydrogène $D_H$ dans la gamme de 0 à 10 1/h;
- débit d'air $D_O$ dans la gamme de 0 à 100 1/h ;
- débit d'air $D_{balayge}$ dans la gamme de 0 à 90 1/h ;
- $P_{consigne}$ dans la gamme de la pression atmosphérique à 30 bars ;
- $\Delta P_{O,consigne}$ dans la gamme de -100 à 100mbars, de préférence 50mbars..

La figure 6 donne l'ordre et le détail des régulations des vannes $V_O$, $V_H$ mises en œuvre par des modules PID :

- asservir la vanne de régulation $V_H$ par rapport à l'écart ($P_{consigne}-P_H$) ;
- calculer la pression différentielle $\Delta P_O = (P_O-P_H)$ ;
- asservir la vanne de régulation $V_O$ par rapport à l'écart ($\Delta P_O-\Delta P_{O,consigne}$).

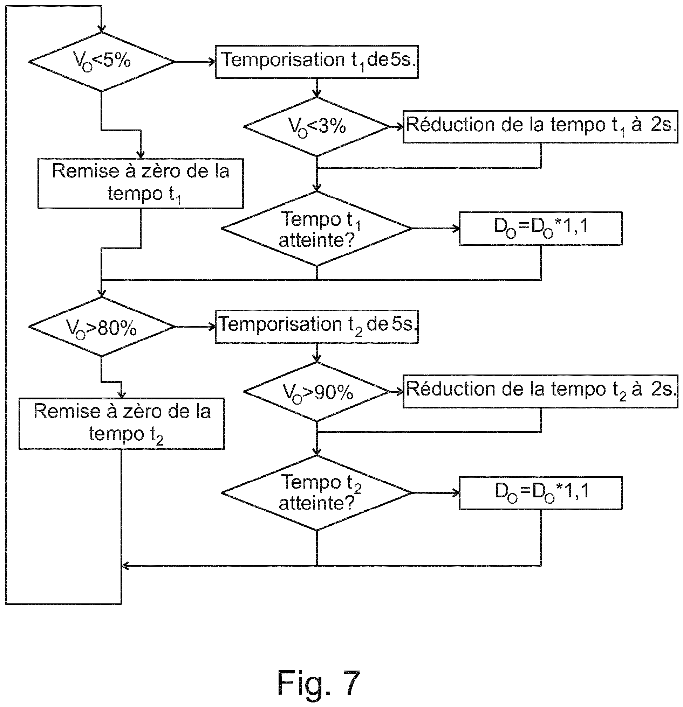

La figure 7 fournit des valeurs numériques correspondant à la mise en œuvre de l'invention dans une enceinte étanche.

Plus précisément, la figure 7 donne le détail de la boucle de régulation du débit d'oxygène $D_O$ en fonction de l'état d'ouverture de la vanne de régulation $V_O$ :

- si $V_O<5\%$ pendant 5 secondes, alors $D_O$ est augmenté de 10% ;
- si $V_O<3\%$ pendant 2 secondes, alors Do est augmenté de 10% ;
- si $V_O>80\%$ pendant 5 secondes, alors Do est diminué de 10% ;
- si $V_O>90\%$ pendant 2 secondes, alors Do est diminué de 10%.

D'autres variantes et avantages de l'invention peuvent être réalisés sans pour autant sortir du cadre de l'invention.

L'invention n'est pas limitée aux exemples qui viennent d'être décrits ; on peut notamment combiner entre elles des caractéristiques des exemples illustrés au sein de variantes non illustrées.

## Références citées

[1] : « Expérimental investigation of the effect ofoperating pressure on the performance of SOFC and SOEC », A. Momma, K. Takano, Y. Takana, T.Kato, A. Yamamoto,

[2] : « High temperature pressurized experiment design, operation and result », J.E. O'Brien, X Zhang, G. K. Housley, K. DeWall, L. Moore-McAteer, G. Tao, DOI 10.1002/fuce 201300076,

[3] : « A validated multi-scale model of a SOFC stack at elevated pressure », M. Henke, C. Willich, C. Westner, F. Leucht, J. Kallo, W. G. Bessler and K. A. Friedrich, Journal of Power Sources, 196(2011) 7195-7202,

[4] : « An experimental investigation of pressurized planar solid oxide fuel cells using two different flow distributors», H.W. Chang, C.M. Huang, S.S. Shy, International Journal of Hydrogen Energy, vol. 38 (2013), 13774-13780,

[5] : « Pressurized testing of a planar solid oxide fuel cell stack », A. A. Burke, L. G. Carreiro, J. R. Izzo Jr., International Journal of Hydrogen Energy, vol. 35 (2010), 9544-9549,

[6] : « Hydrogen and synthetic fuel production using pressurized solid oxide electrolysis cells », S. Hojgaard Jensen, X. Sun, S. Dalgaard Ebbesen, R. Knibbe, M. Mogensen, ECS Transactions, 57 (1) 699-708 (2013),

[7] : « Pressurized solid oxide fuel cells: Experimental studies and modeling», S. Seidler, M. Henkea, J. Kalloa, W. G. Besslera, U. Maierb, A. Friedrich, Journal of Power Sources, 250(2014) 21-29.

## Revendications

1. Système comportant :

- au moins une première chambre (21) dans laquelle un premier gaz, qui est un gaz potentiellement humide, est apte à circuler;

- au moins une première ligne d'alimentation (22) apte à alimenter en gaz potentiellement humide, l'entrée de la première chambre jusqu'à une pression maximale de fonctionnement $P_{max}$, la première ligne d'alimentation comprenant un premier régulateur de débit apte à réguler le débit du premier gaz $D_H$ entre une valeur nulle et une valeur maximale $D_{H,max}$ :

- au moins une deuxième chambre (23) dans laquelle un deuxième gaz de préférence de l'air, est apte à circuler ;

- une enceinte étanche (40) dans laquelle les première et deuxième chambres sont logées, et dans laquelle le même deuxième gaz, est apte à circuler, l'enceinte étant apte à fonctionner sous pression du deuxième gaz jusqu'à la pression maximale de fonctionnement $P_{max}$;

- au moins une deuxième ligne d'alimentation (25) apte à alimenter en deuxième gaz l'enceinte étanche et l'entrée de la deuxième chambre, la deuxième ligne d'alimentation comprenant un deuxième régulateur de débit apte à réguler le débit du deuxième gaz $D_O$ entre une valeur nulle et une valeur maximale $D_{O,max}$;

- au moins une ligne de sortie (29), apte à évacuer le deuxième gaz de l'intérieur de l'enceinte étanche, ladite ligne de sortie comprenant un troisième régulateur de débit apte à réguler le débit du deuxième gaz $D_{balayage}$ entre une valeur nulle et une valeur maximale $D_{balayage,max}$ ;

- des capteurs de pression ($P_H$, $P_O$), aptes à mesurer la pression dans chacune des première et deuxième chambres, entre la pression atmosphérique et la valeur de pression maximale $P_{max}$ ;

- au moins deux vannes de régulation ($V_H$, $V_O$), agencées à l'extérieur de l'enceinte et respectivement sur la ligne de sortie (26; 27) de la ou des premières chambres, de la ou des deuxièmes chambres, chaque vanne étant apte à fonctionner chacune à une température supérieure à la température de condensation du gaz humide à la pression maximale $P_{max}$ considérée, chaque vanne étant apte à être ouverte de 0% à 100% et présentant une capacité $K_v$ adaptée à la pression maximale $P_{max}$ et au débit moyen du gaz considéré sur chacune des deux lignes de sortie (26 ; 27);

- des moyens de chauffage des lignes contenant le gaz humide à une température supérieure à la température de condensation de ce gaz humide à la pression maximale $P_{max}$ considérée ;

- des moyens de commande et d'asservissement pour commander et asservir les vannes de régulation ($V_H$, $V_O$) en fonction des différences de valeurs de pression mesurées par les capteurs de pression de sorte à obtenir une différence minimale de pression entre la ou les premières chambres, la ou les deuxièmes chambres.

2. Système selon la revendication 1, comprenant un condenseur (50) du gaz humide, agencé en aval de la vanne de régulation $V_H$, sur la ligne de sortie (26) de la ou des premières chambres.

3. Système selon la revendication 1 ou 2, les moyens de commande et d'asservissement étant aptes en outre à commander et asservir les régulateurs de débit du deuxième gaz $D_O$ en fonction de l'état d'ouverture des vannes de régulation du deuxième gaz $V_O$, afin d'éviter les états d'ouverture ou de fermeture complète des vannes du deuxième gaz $V_O$.

4. Système selon l'une des revendications 1 à 3, comprenant un réacteur d'électrolyse ou de co-électrolyse à haute température (EHT) comprenant un empilement (20) de cellules d'(de co-)électrolyse élémentaires à oxydes solides comprenant chacune une anode, une cathode, et un électrolyte intercalé entre l'anode et la cathode, les cellules étant connectées électriquement en série, l'empilement comprenant deux bornes électriques pour l'alimentation en courant des cellules et définissant des chambres de circulation de vapeur d'eau et d'hydrogène ou de vapeur d'eau, d'hydrogène et dioxyde de carbone ($CO_2$) sur les cathodes en tant que premières chambres et, des chambres de circulation en air ou en azote ou en oxygène ou un mélange de gaz contenant de l'oxygène sur les anodes en tant que deuxièmes chambres.

5. Système selon l'une des revendications 1 à 3, comprenant une pile à combustible (SOFC) à haute température comprenant un empilement (20) de cellules électrochimiques élémentaires à oxydes solides comprenant chacune une anode, une cathode, et un électrolyte intercalé entre l'anode et la cathode, les cellules étant connectées électriquement en série, l'empilement comprenant deux bornes électriques pour la récupération en courant des cellules et définissant des chambres de circulation en dihydrogène ou un autre gaz combustible ou un mélange contenant un gaz combustible sur les anodes en tant que premières chambres et des chambres de circulation en air ou en azote ou en oxygène ou un mélange de gaz contenant de l'oxygène sur les cathodes en tant que deuxièmes chambres.

6. Système selon l'une des revendications précédentes, comprenant au moins deux capteurs de pression absolue ($P_H$, $P_O$), aptes à mesurer chacun la pression respectivement dans chacune des première chambres, dans chacune des deuxième chambres.

**7.** Système selon l'une des revendications 1 à 5, comprenant au moins un capteur de pression absolue $P_H$, apte à mesurer chacun la pression dans chacune des première chambres, et comprenant au moins un capteur de pression différentiel aptes à mesurer respectivement la différence de pression entre la ou les deuxième chambres et la ou les première chambres $\Delta P_O = (P_O - P_H)$.

**8.** Système selon l'une des revendications précédentes, comprenant en outre des vannes de by-pass $V_{H,bypass}$, $V_{O,bypass}$ agencées chacune en parallèle respectivement des vannes de régulation $V_H$, $V_O$.

**9.** Procédé de fonctionnement du système selon l'une des revendications précédentes, comprenant les étapes suivantes :

a/ définir les consignes de fonctionnement suivantes :

a1/ définir un débit $D_H$ qui correspond à la quantité de gaz potentiellement humide nécessaire pour un point de fonctionnement électrochimique prédéterminé;
a2/ définir un débit $D_O$ qui correspond à la quantité de deuxième gaz nécessaire pour un point de fonctionnement électrochimique prédéterminé et le balayage de l'enceinte étanche;
a3/ définir un débit $D_{balayage}$ qui correspond à la quantité de deuxième gaz nécessaire pour assurer la détection et la sécurité vis-à-vis des fuites et éviter la formation d'une atmosphère explosive dans l'enceinte;
a4/ définir une pression $P_{consigne}$ pour le point de fonctionnement prédéterminé ;
a5/ définir la pression différentielle $\Delta P_{O,ccnsigne}$ correspondant à l'écart de pressions entre celle régnant dans la ou les deuxièmes chambres ainsi que dans l'enceinte étanche, et celle dans la ou les premières chambres;

b/ appliquer les régulations suivantes :

b1/ actionner le (ou les) régulateur(s) de débit de gaz humide, afin de réguler le débit $D_H$ du gaz humide ;
b2/ actionner le (ou les) régulateur(s) de débit de deuxième gaz, afin de réguler le débit Do entrant dans la ou les secondes chambres et dans l'enceinte;
b3/ actionner le (ou les) régulateur(s) de débit du gaz de balayage, afin de réguler le débit $D_{balayage}$ sortant de l'enceinte;

b4/ actionner la vanne de régulation $V_H$ du gaz humide pour réguler la pression $P_H$ réelle de la ou des premières chambres sur la valeur de consigne $P_{consigne}$ ;
b5/ actionner la vanne $V_O$ du deuxième gaz de sorte que la pression différentielle réelle entre la ou les deuxièmes chambres et dans l'enceinte d'une part, et la ou les premières chambres $\Delta P_O = (P_O - P_H)$ d'autre part, soit régulée en fonction de l'erreur mesurée par rapport à la consigne $(\Delta P_{O,consigne} - \Delta P_O)$, afin que la pression $P_O$ du deuxième gaz suive celle $P_H$ de la ou des premières chambres avec la pression différentielle de consigne $\Delta P_{O,consigne}$.

**10.** Procédé de fonctionnement selon la revendication 9, comprenant en outre une étape d'augmentation de débit du deuxième gaz $D_O$ si la vanne de régulation du deuxième gaz $V_O$, est proche d'un état de fermeture complète.

**11.** Procédé de fonctionnement selon la revendication 9, comprenant en outre une étape de diminution de débit du deuxième gaz $D_O$ si la vanne de régulation du deuxième gaz $V_O$, est proche d'un état d'ouverture complète.

**Patentansprüche**

**1.** System, aufweisend:

- mindestens eine erste Kammer (21), in welcher ein erstes Gas, das ein potentiell feuchtes Gas ist, strömen kann;
- mindestens eine erste Versorgungsleitung (22), die geeignet ist, den Einlass der ersten Kammer bis zu einem maximalen Betriebsdruck $P_{max}$ mit potentiell feuchtem Gas zu versorgen, die erste Versorgungsleitung umfassend einen ersten Durchsatzregler, der geeignet ist, den Durchsatz des ersten Gases $D_H$ zwischen einem Nullwert und einem Maximalwert $D_{H,max}$ zu regeln;
- mindestens eine zweite Kammer (23), in welcher ein zweites Gas, vorzugsweise Luft, strömen kann;
- eine dichte Umhausung 40, in welcher die erste und zweite Kammer aufgenommen sind, und in welcher dasselbe zweite Gas strömen kann, wobei die Umhausung geeignet ist, unter Druck des zweiten Gases bis zu einem maximalen Betriebsdruck $P_{max}$ zu funktionieren;
- mindestens eine zweite Versorgungsleitung (25), die geeignet ist, die dichte Umhausung und den Einlass der zweiten Kammer mit zweitem Gas zu versorgen, die zweite Versorgungsleitung umfassend einen zweiten Durchsatzregler, der geeignet ist, den Durchsatz des zweiten Gases $D_O$ zwischen einem Nullwert und einem Maximalwert $D_{O,max}$ zu regeln;

- mindestens eine Ausgangsleitung (29), die geeignet ist, das zweite Gas aus dem Inneren der dichten Umhausung abzulassen, die Ausgangsleitung umfassend einen dritten Durchsatzregler, der geeignet ist, den Durchsatz des zweiten Gases $D_{Abtastung}$ zwischen einem Nullwert und einem Maximalwert $D_{Abtastung,max}$ zu regeln;

- Drucksensoren ($P_H$, $P_O$), die geeignet sind, den Druck in jeder der ersten und zweiten Kammer zwischen dem Atmosphärendruck und dem maximalen Druckwert $P_{max}$ zu messen;

- mindestens zwei Regelventile ($V_H$, $V_O$), die außerhalb der Umhausung und auf der Ausgangsleitung (26; 27) der ersten Kammer(n) beziehungsweise der zweiten Kammer(n) angeordnet sind, wobei jedes Ventil geeignet ist, jeweils bei einer Temperatur zu funktionieren, die höher als die Kondensationstemperatur des feuchten Gases beim betrachteten Maximaldruck $P_{max}$ ist, wobei jedes Ventil geeignet ist, von 0 % bis 100 % geöffnet zu sein und eine Kapazität $K_v$ aufweist, die für den Maximaldruck $P_{max}$ und den mittleren Durchsatz des betrachteten Gases auf jeder der zwei Ausgangsleitungen (26; 27) geeignet ist;

- Mittel zum Erhitzen der Leitungen, die das feuchte Gas enthalten, auf eine Temperatur über der Kondensationstemperatur dieses feuchten Gases beim betrachteten Maximaldruck $P_{max}$;

- Steuerungs- und Regelungsmittel zur Steuerung und Regelung der Regelventile ($V_H$, $V_O$) in Abhängigkeit von den Differenzen von Druckwerten, die durch die Drucksensoren gemessen werden, um eine Minimaldruckdifferenz zwischen der oder den ersten Kammern, der oder den zweiten Kammern zu erhalten.

2. System nach Anspruch 1, umfassend einen Kondensor (50) des feuchten Gases, der stromab des Regelventils $V_H$ auf der Ausgangsleitung (26) der ersten Kammer(n) angeordnet ist.

3. System nach Anspruch 1 oder 2, wobei die Steuerungs-und Regelungsmittel ferner geeignet sind, die Durchsatzregler des zweiten Gases $D_O$ in Abhängigkeit von dem Öffnungszustand der Regelventile des zweiten Gases $V_O$ zu steuern und zu regeln, um die Zustände vollständiger Öffnung oder Schließung der Ventile des zweiten Gases $V_O$ zu vermeiden.

4. System nach einem der Ansprüche 1 bis 3, umfassend einen Reaktor für Hochtemperatur-Elektrolyse oder -Co-Elektrolyse (HTE) umfassend einen Stapel (20) von elementaren Festoxid- (Co-) Elektrolysezellen umfassend jeweils eine Anode, eine Kathode und einen Elektrolyten, der zwischen der Anode und der Kathode angeordnet ist, wobei die Zellen elektrisch in Reihe geschaltet sind, wobei der Stapel zwei elektrische Anschlüsse zur Stromversorgung der Zellen umfasst und Kammern zur Zirkulation von Wasserdampf und Wasserstoff oder Wasserdampf, Wasserstoff und Kohlendioxid ($CO_2$) auf den Kathoden als erste Kammern und Kammern zur Zirkulation von Luft oder Stickstoff oder Sauerstoff oder eines Gasgemischs mit Sauerstoff auf den Anoden als zweite Kammern definiert.

5. System nach einem der Ansprüche 1 bis 3, umfassend eine Hochtemperaturbrennstoffzelle (SOFC) umfassend einen Stapel (20) von elementaren elektrochemischen Festoxidzellen, umfassend jeweils eine Anode, eine Kathode und einen Elektrolyten, der zwischen der Anode und der Kathode angeordnet ist, wobei die Zellen elektrisch in Reihe geschaltet sind, wobei der Stapel zwei elektrische Anschlüsse zur Stromrückgewinnung aus den Zellen umfasst und Kammern zur Zirkulation von Wasserstoff oder eines anderen brennbaren Gases oder eines Gemischs mit einem brennbaren Gas auf den Anoden als erste Kammern und Kammern zur Zirkulation von Luft oder Stickstoff oder Sauerstoff oder eines Gasgemischs mit Sauerstoff auf den Kathoden als zweite Kammern definiert.

6. System nach einem der vorhergehenden Ansprüche, umfassend mindestens zwei Absolutdrucksensoren ($P_H$, $P_O$), die geeignet sind, jeweils den Druck in jeder der ersten beziehungsweise zweiten Kammern zu messen.

7. System nach einem der Ansprüche 1 bis 5, umfassend mindestens einen Absolutdrucksensor $P_H$, der jeweils geeignet ist, den Druck in jeder der ersten Kammern zu messen, und umfassend mindestens einen Differenzdrucksensor, die jeweils geeignet sind, die Druckdifferenz zwischen der oder den zweiten Kammern beziehungsweise der oder den ersten Kammern zu messen $\Delta P_O = (P_O - P_H)$.

8. System nach einem der vorhergehenden Ansprüche, ferner umfassend Bypassventile $V_{H,bypass}$, $V_{O,bypass}$, die jeweils parallel zu den Regelventilen $V_H$, $V_O$ angeordnet sind.

9. Betriebsverfahren des Systems nach einem der vorhergehenden Ansprüche, umfassend die folgenden Schritte:

    a) Definieren der folgenden Betriebsvorgaben:

        a1) Definieren eines Durchsatzes $D_H$, der der Menge potentiell feuchten Gases entspricht, die für einen vorbestimmten elektrochemischen Betriebspunkt notwendig ist;

a2) Definieren eines Durchsatzes $D_O$, welcher der Menge zweiten Gases entspricht, die für einen vorbestimmten elektrochemischen Betriebspunkt und die Abtastung der dichten Umhausung notwendig ist;

a3) Definieren eines Durchsatzes $D_{Abtastungo}$, welcher der Menge zweiten Gases entspricht, die notwendig ist, um die Detektion und die Sicherheit gegenüber Leckagen sicherzustellen und die Bildung einer explosionsfähige Atmosphäre in der Umhausung zu vermeiden;

a4) Definieren eines Drucks $P_{Vorgabe}$ für den vorbestimmten Betriebspunkt;

a5) Definieren des Differenzdrucks $\Delta P_{O,Vorgabe}$, welcher der Druckabweichung zwischen jenem, der in der oder den zweiten Kammern sowie in der dichten Umhausung vorherrscht, und jenem in der oder den ersten Kammern entspricht;

b) Anwenden der folgenden Regelungen:

b1) Betätigen des (oder der) Durchsatzregler(s) für feuchtes Gas, um den Durchsatz $D_H$ des feuchten Gases zu regeln;

b2) Betätigen des (oder der) Zweitgasdurchsatzregler(s), um den Durchsatz $D_O$ zu regeln, der in die zweite(n) Kammer(n) und in die Umhausung eintritt;

b3) Betätigen des (oder der) Durchsatzregler(s) des Abtastgases, um den Durchsatz $D_{Abtastung}$ zu regeln, der aus der Umhausung austritt;

b4) Betätigen des Regelventils $V_H$ des feuchten Gases, um den Ist-Druck $P_H$ der ersten Kammer(n) auf den Vorgabewert $P_{Vorgabe}$ zu regeln;

b5) Betätigen des Ventils $V_O$ des zweiten Gases, so dass der Ist-Differenzdruck zwischen der oder den zweiten Kammern und in der Umhausung einerseits und der oder den ersten Kammern $\Delta P_O = (P_O - P_H)$ andererseits, je nach dem Fehler geregelt wird, der bezogen auf die Vorgabe $(\Delta P_{O,Vorgabe} - \Delta P_O)$ gemessen wird, damit der Druck $P_O$ des zweiten Gases jenem $P_H$ der ersten Kammer(n) mit dem Vorgabe-Differenzdruck $\Delta P_{O,Vorgabe}$ folgt.

10. Betriebsverfahren nach Anspruch 9, ferner umfassend einen Schritt des Erhöhens des Durchsatzes des zweiten Gases $D_O$, wenn sich das Regelventil des zweiten Gases $V_O$ in der Nähe eines Zustands vollständiger Schließung befindet.

11. Betriebsverfahren nach Anspruch 9, ferner umfassend einen Schritt des Verringerns des Durchsatzes des zweiten Gases $D_O$, wenn sich das Regelventil des zweiten Gases $V_O$ in der Nähe eines Zustands vollständiger Öffnung befindet.

**Claims**

1. A system including:

- at least one first chamber (21) through which a first gas, which is a gas that is potentially wet, is able to flow;
- at least one first supply line (22) that is able to supply the inlet of the first chamber with potentially wet gas up to a maximum operating pressure $P_{max}$, the first supply line comprising a first flow-rate regulator that is able to regulate the flow rate $D_H$ of the first gas between a zero value and a maximum value $D_{H,max}$;
- at least one second chamber (23) through which a second gas, preferably air, is able to flow;
- a seal-tight enclosure (40) in which the first and second chambers are housed, and through which the same second gas is able to flow, the enclosure being able to operate under the pressure of the second gas up to the maximum operating pressure $P_{max}$;
- at least one second supply line (25) that is able to supply the seal-tight enclosure and the inlet of the second chamber with the second gas, the second supply line comprising a second flow-rate regulator that is able to regulate the flow rate $D_O$ of the second gas between a zero value and a maximum value $D_{O,max}$;
- at least one outlet line (29) that is able to exhaust the second gas from inside the seal-tight enclosure, said outlet line comprising a third flow-rate regulator that is able to regulate the flow rate $D_{purge}$ of the second gas between a zero value and a maximum value $D_{purge,max}$;
- pressure sensors ($P_H$, $P_O$) that are able to measure the pressure in each of the first and second chambers, between atmospheric pressure and the value of the maximum pressure $P_{max}$;
- at least two regulating valves ($V_H$, $V_O$) that are arranged outside the enclosure and on the outlet lines (26; 27) of the one or more first chambers and of the one or more second chambers, respectively, each valve being able to operate each at a temperature above the condensation temperature of the wet gas at the maximum pressure $P_{max}$ in question, each valve being able to be open from 0% to 100% and having a capacity $K_v$ suitable for the maximum pressure $P_{max}$ and for the average flow rate of the gas in question in each of the two outlet lines (26; 27);
- means for heating the lines containing the wet gas to a temperature above the condensation temperature of this wet gas at the maximum pressure $P_{max}$ in question; and
- commanding and automatically controlling means for commanding and automatically controlling the regulating valves ($V_H$, $V_O$) depending on differences in pressure values measured by the pressure sensors so as to obtain a minimum pressure difference between the one or more first chambers and the one or more second chambers.

2. The system as claimed in claim 1, comprising a condenser (50) for condensing the wet gas, said condenser being arranged downstream of the regulating valve $V_H$ on the outlet line (26) of the one or more first chambers.

3. The system as claimed in claim 1 or 2, the commanding and automatically controlling means furthermore being able to command and automatically control the regulators regulating the flow rate $D_O$ of the second gas depending on the state of openness of the valves $V_O$ for regulating the second gas, in order to prevent states of complete openness or closedness of the valves $V_O$ for the second gas.

4. The system as claimed in one of claims 1 to 3, comprising a high-temperature electrolysis or co-electrolysis (HTE) reactor comprising a stack (20) of elementary solid-oxide (co-)electrolysis cells each comprising an anode, a cathode, and an electrolyte inserted between the anode and the cathode, the cells being electrically connected in series, the stack comprising two electrical terminals for the supply of current to the cells and defining flow chambers for, with respect to the first chambers, the flow of steam and hydrogen or of steam, hydrogen and carbon dioxide ($CO_2$) over the cathodes and flow chambers for, with respect to the second chambers, the flow of air or nitrogen or oxygen or of a mixture of gases containing oxygen over the anodes.

5. The system as claimed in one of claims 1 to 3, comprising a high-temperature fuel-cell (SOFC) stack comprising a stack (20) of elementary solid-oxide electrochemical cells each comprising an anode, a cathode, and an electrolyte inserted between the anode and the cathode, the cells being electrically connected in series, the stack comprising two electrical terminals for the collection of current from the cells and defining flow chambers for, with respect to the first chambers, the flow of dihydrogen or another fuel gas or of a mixture containing a fuel gas over the anodes and flow chambers for, with respect to the second chambers, the flow of air or nitrogen or oxygen or of a mixture of gases containing oxygen over the cathodes.

6. The system as claimed in one of the preceding claims, comprising at least two absolute pressure sensors ($P_H$, $P_O$) that are each able to measure the pressure in each of the first chambers and in each of the second chambers, respectively.

7. The system as claimed in one of claims 1 to 5, comprising one or more absolute pressure sensors $P_H$ that are each able to measure the pressure in each of the first chambers, and comprising one or more differential pressure sensors that are able to measure the pressure difference $\Delta P_O = (P_O - P_H)$ between the one or more second chambers and the one or more first chambers, respectively.

8. The system as claimed in one of the preceding claims, furthermore comprising bypass valves $V_{H,bypass}$, $V_{O,bypass}$ that are each arranged in parallel with the regulating valves $V_H$, $V_O$, respectively.

9. A method for operating the system as claimed in one of the preceding claims, comprising the following steps:

a/ defining the following operating setpoints:

a1/ defining a flow rate $D_H$ that corresponds to the amount of potentially wet gas required for a preset electrochemical operating point;
a2/ defining a flow rate $D_O$ that corresponds to the amount of second gas required for a preset electrochemical operating point and to purge the seal-tight enclosure;
a3/ defining a flow rate $D_{purge}$ that corresponds to the amount of second gas required to ensure detection of and safety with respect to leaks and to avoid the formation of an explosive atmosphere in the enclosure;
a4/ defining a pressure $P_{setpoint}$ for the preset operating point;
a5/ defining the differential pressure $\Delta P_{O,setpoint}$ corresponding to the pressure difference between the pressure in the one or more second chambers and in the seal-tight enclosure, and the pressure in the one or more first chambers;

b/ applying the following regulations:

b1/ actuating the (or the more than one) regulator(s) for regulating the flow rate of wet gas, in order to regulate the flow rate $D_H$ of the wet gas;

b2/ actuating the (or the more than one) regulator(s) for regulating the flow rate of second gas, in order to regulate the flow rate Do entering into the one or more second chambers and into the enclosure;

b3/ actuating the (or the more than one) regulator(s) for regulating the flow rate of purge gas, in order to regulate the flow rate $D_{purge}$ exiting from the enclosure;

b4/ actuating the valve $V_H$ for regulating the wet gas in order to regulate the actual pressure $P_H$ of the one or more first chambers to the setpoint value $P_{setpoint}$; and

b5/ actuating the valve $V_O$ of the second gas so that the actual differential pressure $\Delta P_O=(P_O-P_H)$ between, on the one hand, the one or more second chambers and in the enclosure and, on the other hand, the one or more first chambers, is regulated depending on the measured error ($\Delta P_{O,setpoint}-\Delta P_O$) with respect to the setpoint, so that the pressure $P_O$ of the second gas follows that $P_H$ of the one or more first chambers with the setpoint differential pressure $\Delta P_{O,setpoint}$.

10. The operating method as claimed in claim 9, furthermore comprising a step of increasing the flow rate $D_O$ of the second gas if the valve $V_O$ for regulating the second gas is close to a state of complete closedness.

11. The operating method as claimed in claim 9, furthermore comprising a step of decreasing the flow rate $D_O$ of the second gas if the valve $V_O$ for regulating the second gas is close to a state of complete openness.

10

$O^{2-} \rightarrow 1/2\,O_2 + 2e^-$

$O_2$

$e^-$

14

$O^{2-}$

16

12

$e^-$

$H_2O$

$H_2$

$H_2O + 2e^- \rightarrow H_2 + O^{2-}$

## Fig. 1

20

30  18  26

$H_2$
$O_2$

10

$O^{2-}$

18

$H_2$
$O_2$

10

$O^{2-}$

18

$H_2$
$O_2$

$D^C_{H_2O}$

$I$

$I^C$

28

$H_2O$

22

24

$H_2$
$O_2$

$O^{2-}$

10

$H_2$
$O_2$

18

$O^{2-}$

10

$H_2$
$O_2$

18

32

## Fig. 2

$$\frac{1}{2}O_2 + 2e^- \rightarrow O^{2-}$$

$O_2$

$e^-$

$O^{2-}$

$14$

$16$

$30$

$12$

$H_2$

$H_2O$

$H_2 + O^{2-} \rightarrow H_2O + 2e^-$

# Fig. 3

$22$

$26$

$V_{H,bypass}$

$50$

$D_H$

$P_H$

Chambre
hydrogène

$V_H$

condenseur

$21$

$D_0$

$P_0$

Chambre
oxygène

$V_{O,bypass}$

$23$

$25$

$27$

$V_O$

Enceinte
pression
étanche

$D_{balayage}$

$40$

$29$

# Fig. 4

Fig. 5

Fig. 6

Fig. 7

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- WO 2011110676 A
- FR 2957361 A1
- US 20020081471 A
- US 6689499 B2
- WO 2012008954 A1
- US 7985507 B2
- FR 1559504
- WO 2015185039 A1
- JP 2010146934 B

**Littérature non-brevet citée dans la description**

- **A. MOMMA ; K. TAKANO ; Y. TAKANA ; T.KATO ; A. YAMAMOTO.** *Expérimental investigation of the effect ofoperating pressure on the performance of SOFC and SOEC*
- **J.E. O'BRIEN ; X ZHANG ; G. K. HOUSLEY ; K. DEWALL ; L. MOORE-MCATEER ; G. TAO.** *High temperature pressurized experiment design, operation and result*
- **M. HENKE ; C. WILLICH ; C. WESTNER ; F. LEUCHT ; J. KALLO ; W. G. BESSLER ; K. A. FRIEDRICH.** A validated multi-scale model of a SOFC stack at elevated pressure. *Journal of Power Sources,* 2011, vol. 196, 7195-7202
- **H.W. CHANG ; C.M. HUANG ; S.S. SHY.** An experimental investigation of pressurized planar solid oxide fuel cells using two different flow distributors. *International Journal of Hydrogen Energy,* 2013, vol. 38, 13774-13780
- **A. A. BURKE ; L. G. CARREIRO ; J. R. IZZO JR.** Pressurized testing of a planar solid oxide fuel cell stack. *International Journal of Hydrogen Energy,* 2010, vol. 35, 9544-9549
- **S. HOJGAARD JENSEN ; X. SUN ; S. DALGAARD EBBESEN ; R. KNIBBE ; M. MOGENSEN.** Hydrogen and synthetic fuel production using pressurized solid oxide electrolysis cells. *ECS Transactions,* 2013, vol. 57 (1), 699-708
- **S. SEIDLER ; M. HENKEA ; J. KALLOA ; W. G. BESSLERA ; U. MAIERB ; A. FRIEDRICH.** Pressurized solid oxide fuel cells: Experimental studies and modeling. *Journal of Power Sources,* 2014, vol. 250, 21-29